# EUROPEAN PATENT APPLICATION

(11) **EP 2 820 959 A1**
(43) Date of publication of application: **07.01.2015**
(21) Application number: 13755425.9
(22) Date of filing: 28.02.2013
(51) Int. Cl.: A23K 1/18, A23K 1/00, A23K 1/16, A23K 1/175

(54) **PET FOOD**

(30) Priority: 29.02.2012 JP 2012044742
(71) Applicant: Unicharm Corporation, Shikokuchuo-shi, Ehime 799-0111 (JP)
(72) Inventor: SAKODA, Junya, Itami-shi Hyogo 664-0831 (JP); USUI, Takahiro, Itami-shi Hyogo 664-0831 (JP)
(74) Representative: Peter, Julian
(86) International application number: PCT/JP2013/055598
(87) International publication number: WO 2013/129636

(57) **Abstract**

To provide a pet food that is configured to stabilize quality by rigorous regulation of mineral components, and at the same time, that exhibits superior palatability in relation to a pet food for a cat of advanced age that requires rigorous regulation of mineral components. A granular pet food having a bulk density of at least 38.5 g/100ml and no more than 50.0 g/100ml, and a fluctuation range defined as the maximum to the minimum value of the total mineral content amount across 10 product lots being no more than 1.0%.

## Description

### TECHNICAL FIELD

The present invention relates to a pet food. More particularly, the present invention relates to a pet food that has superior palatability and that prevents the incidence of a urinary calculus in a pet animal such as a cat.

### BACKGROUND ART

It is a well known fact that stone formation occurs in the urinary tract of dogs and cats. Furthermore mineral components in pet food have a large effect on the pH or components of urine, and in order to remedy such a problem, for example, as disclosed in Patent Document 1, the canine urinary tract can be maintained in a superior condition by limiting the content amount of mineral components such as calcium or phosphorous in pet food to a specific range.
Patent Document 1: Japanese Translation of PCT International Publication, Publication No. 2003-518938

### DISCLOSURE OF THE INVENTION

### Problems to be Solved by the Invention

As described above, it is known that the occurrence of urinary stone formation can be suppressed by regulating the mineral components that have a large effect on the urine pH or pH components. For example, in a pet food for a cat of advanced age that requires specific suppression of the occurrence of a urinary calculus, mineral components should be limited to a rigorously fixed range during preparation.

On the other hand, a general pet food for a cat contains a protein source of animal origin such as chicken meal or fish meal. The protein source of animal origin is a source of minerals, and in addition enhances palatability. However, these protein sources of animal origin exhibit a strong fluctuation range in relation to the content amount of a mineral component for each product lot. As a result, the manufacture of pet food for cats of advanced age requires rigorous regulation of the content amount of a mineral component, and the protein sources of animal origin have been a cause of a reduction in quality stability.

In this context, as a substitute for a protein source of animal origin, it has been proposed in relation to the manufacture of pet food for cats of advanced age to use a protein source of plant origin such as corn gluten that exhibits a relatively small fluctuation range in the mineral content amount in each product lot. In this manner, the stability of quality can be enhanced by rigorous regulation of the content amount of mineral components in relation to the manufacture of a pet food for a cat of advanced age.

However, in substitution for a protein source of animal origin, when a protein source of plant origin is used, there is the problem that the amount that is consumed decreases as a result of the decrease in palatability. In other words, in a pet food that requires rigorous regulation of mineral components, such as a pet food for a cat of advanced age that is adapted to suppress the occurrence of a urinary calculus, the current situation is that palatability is sacrificed to enable rigorous regulation of mineral components, and there is a need for further improvement in relation to this point.

The present invention is proposed in relation to the issues discussed above, and it is an object of the present invention to provide a pet food that is configured to stabilize quality by rigorous regulation of mineral components, and at the same time, that exhibits superior palatability.

### Means for Solving the Problems

The present inventors conducted diligent research into solving the above problems, and completed the present invention with the insight that a reduction in palatability could be sufficiently prevented by regulating the bulk density of pet food to a fixed range even when a protein source of plant origin is used as the principal protein source. More specifically, the present invention provides the following features.
(1) A granular pet food having a bulk density of at least 38.5 g/100ml and no more than 50.0 g/100ml, and a fluctuation range defined as the maximum to the minimum value of the total mineral content amount across 10 product lots being no more than 1.0%.
(2) The pet food according to (1) above wherein the fluctuation range of the phosphorous content amount for each product lot is no more than 0.2%.
(3) The pet food according to (1) or (2) above containing a protein source material of plant origin of at least 12 mass% and at least than 20 mass% in the pet food, and a protein source material of animal origin of no more than 20 mass% in the pet food.
(4) The pet food according to any one of (1) to (3) above wherein the protein source material of plant origin is corn gluten.
(5) The pet food according to any one of (1) to (4) above wherein the corn gluten is contained in at least 12 mass% and no more than 20 mass% in the pet food.
(6) A method of manufacturing a pet food of granular form, comprising a swelling-granulation step of processing, into granular form while swelling, a pet food raw material containing: a protein material having at least 12 mass% content of plant derived protein source material, with a protein content of at least 40 mass% and no more than 80 mass%; and no more than 20 mass% content of animal derived protein source material with a protein content of at least 40 mass% and no more than 80 mass%, wherein a swelling amount of the pet food raw material is regulated in the swelling-granulation step so that a bulk density of each grain of the pet food is at least 38.5 g/100 ml and no more than 50.0 g/100 ml.
(7) The method of manufacturing a pet food according to (6) above wherein the regulation of the swelling amount of the pet food starting material during the swelling granulation step is performed by regulation of a steam amount configured to fill an extruder and/or preconditioner.

### Effects of the Invention

According to the present invention, a pet food that has superior palatability and that enables rigorous regulation of the mineral components can be provided by use of a protein source material of plant origin as a principal protein source material.

### PREFERRED MODE FOR CARRYING OUT THE INVENTION

Although the embodiment of the present invention will be described in detail below, the present invention is not limited to the following embodiment, and suitable variation may be added to the present invention within the scope of the object of the present invention.

### Basic Composition of Pet Food

Pet food in the present invention refers to feed provided to a pet animal. A pet animal refers to an animal that is reared by humans and lives together with humans, and there is no limitation on the type thereof. In the present embodiment, the pet food is described in relation to use for a cat. The pet food is feed that contains the nutritional components that are desirable in relation to the age and constitution of a cat.

The pet food in the present embodiment is configured as a granular hard material that is dried to a moisture content of no more than 12 mass%. The pet food according to the present disclosure is a pet food that is configured with a protein source material of plant origin as the principal protein source by limiting and regulating the bulk relative density of the granular hard material to a specific range, and therefore, a reduction in palatability can be minimized.

Firstly, the composition and the raw materials used in the pet food will be described. The raw materials may be a conventional and known formulation without limitation not including the protein source material that is a characteristic feature of the present disclosure. One example of the raw materials includes 10 to 60 mass% of varieties of cereals such as corn or the like, 0 to 10 mass% of fiber source materials such as beet pulp or the like, 2 to 20 mass% of animal fats and oils, 1 to 3 mass % of minerals and vitamin varieties as a single component, 0.1 to 4.0 mass% of a palatability enhancing material that contains amino acid(s) and is a meat or vegetable extract, and a suitable amount of water not exceeding 12 mass%. The protein source material described in detail below is contained in an amount of 10 to 40 mass%.

### Protein Source Material

In the present disclosure, the protein source material refers to a processed product of plant origin that includes protein as a main constituent, or a processed product of animal origin that contains protein as a main constituent, in relation to materials that are added to pet food to thereby configure a protein mass amount in the pet food to a desirable range. More specifically, the protein content amount measured by a Kjeldahl method is at least 40 mass% and no more than 80 mass%. The substance above includes a protein source material of animal origin that can be obtained by processing of meat such as pork, chicken or the like and a protein source material of plant origin that can be obtained by processing of cereal varieties such as corn or the like.

A specific example of a protein source material of plant origin is a corn-based processed material such as corn gluten or the like. As described in the following examples, all the protein source materials of plant origin have a low total mineral content amount and an extremely small fluctuation range in relation to the content amount of minerals in respective product lots in comparison to the protein source materials of animal origin described below. Of those protein source materials, corn gluten is preferably used in light of excellent stability of the mineral content amount in addition and high availability at low cost. Corn gluten in the present disclosure means a substance obtained by separation of protein during a refining step of corn. The total mineral content amount contained in protein source materials of plant origin is generally no more than 7% which is a figure obtained as crude ash measured by a thermal ashing method. Hereinafter, in the absence of indication to the contrary, the total mineral content amount in the present specification means the above figure.

A specific example of a protein source material of animal origin is a processed product that includes a principal constituent component such as meat from animals such as fish meal, chicken meal and pork meal or the like. In all of the above configurations, amino acids are also included as a protein source to thereby enhance the palatability of the pet food as a flavor-enhancing component. However, as described in the following examples, the total mineral content amount of a protein source material of animal origin is high, and the fluctuation range of the mineral content amount in each product lot is extremely large in comparison to the above protein source material of plant origin. The total mineral content amount contained in a protein source material of animal origin is generally at least 10% and no more than 20% which is a figure obtained as crude ash measured by a thermal ashing method. However even a protein source material of animal origin includes beef tallow cake which does not substantially contain a mineral component, and since such a material does not cause a problem in relation to a deviation in the mineral component, combined use is preferred with a protein source material of plant origin within a predetermined content amount range. For example, beef tallow cake is preferably contained at least 10% and less than 15%.

In the present specification, animal fats and oils such as beef fat, chicken fat or the like that do not include animal meat as a principal component, and a cereal such as wheat flour or corn that has not undergone special processing other than simple drying are not included in the above protein source material even in relation to a material that contains protein. The main characteristic feature of the present disclosure is that a reduction in the content amount of a "protein source material of animal origin" as defined above and an increase in the content amount of a "protein source material of plant origin" as defined above exhibits a superior effect in relation to both stability of the mineral component regulation and maintenance of palatability in a state of being an essentially required feature to ensure quality stability. Therefore, the content amount of a cereal or animal fats and oils as described above is not an essential constituent feature in order to limit the scope of the present disclosure.

In the present disclosure, it is preferred that the protein source material is mainly a protein source material configured as a protein source material of plant origin. The content amount of the protein source material of plant origin in the pet food is at least 12 mass% and preferably at least 15 mass%. Alternatively, the content amount of the protein source material of animal origin in pet food is no more than 20 mass% and preferably no more than 18 mass%. The above range in relation to the configuration of the protein source material in the pet food enables a reduction in the mineral content amount originating in the protein source material while ensuring a protein mass that is required by the pet food. In addition, the adaptation of the configuration of the protein source material in the pet food to the above range enables stable regulation of the content amount in a product lot of the pet food product to a suitable range. The pet food according to the present disclosure enables a configuration in which the fluctuation range in the mineral content amount in each product lot is no more than 1.0%. In the present specification, a reference to the fluctuation range in the mineral content amount in each product lot refers to the difference between the maximum value (mass%) and the minimum value (mass%) in the mineral content amount in each product lot across 10 product lots of 50 kg to 100 kg per lot.

Although a protein source material of animal origin is often configured as chicken meal, pork bone meal or the like, in the present disclosure the content amount of a meal of animal origin, other than fish varieties, such pork bone meal, chicken meal or the like is 0 mass%, that is to say, no use is preferred. However, a meal of fish origin such as fish meal or the like is preferably used in a content amount range of no more than 10 mass% as a protein source material and a ω3 fatty acid source in substitution for the respective meals of animal origin as described above.

The total mineral content amount in the pet food may be suitably regulated to a range of 1% to 8% in response to a use or purpose of the pet food. However, as a pet food for a cat of advanced age of at least 6 years of age for example, it is preferable to regulate the respective content amount of each mineral so that the total mineral content amount from the point of view of prevention of stone formation is 3% to 5%.

Furthermore, when the content amount of phosphorus in particular of the minerals in the pet food is restricted to a specific range, it is shown that superior maintenance of the condition of the urinary tract is enabled. As a result, in particular, it is still more preferable that the regulation of the respective mineral content amounts is configured so that the total amount of phosphorus in the pet food is in a range of at least 0.50% to no more than 0.75%. As described above, the pet food according to the present disclosure uses a protein source material of plant origin as a principal protein source material to thereby configure the fluctuation range of the phosphorous content amount in respective product lots to be no more than 0.2%. Therefore, the phosphorous content amount in the preferred range above can be regulated with a high degree of accuracy.

### Inorganic Compounds

In the present disclosure, an inorganic compound to supplement the mineral component may be further included. In the present disclosure, the substitution of a portion of the animal protein source material by a plant protein source material enables a configuration in which the deviation in the mineral content amount originating in the protein source is extremely small. In this manner, in the present disclosure, the addition of an inorganic compound enables rigorous regulation of the total mineral content amount to the above desired range.

The inorganic compound to supplement the mineral component may be suitably selected in response to the amount and type of the target mineral. Examples of a calcium source include calcium carbonate or calcium phosphate, or the like. Examples of a phosphorus source include calcium phosphate or the like. Examples of a potassium source include potassium chloride, or the like.

### Palatability Enhancing Material

In the present disclosure, a palatability enhancing material means an added material that contains amino acids added to a pet food in order to enhance palatability by coating onto the granule surface of the pet food. Examples include meat extract, fish extract, vegetable extract, yeast extract, or the like, in addition to a digest which is a flavoring agent that includes such extracts. Use in a combination of two or more of the above is preferred.

### Bulk Density of Pet Food Granules

The pet food according to the present disclosure is configured by reducing the content amount of the protein source material of animal origin and increasing the content amount of the protein source material of plant origin. A raw material composition ratio as described above increases the stability of mineral component regulation however reduces the palatability by reducing the flavoring components such as amino acids that are contained in the meat of an animal or the like. However, a manufacturing method as described below for the pet food according to the present disclosure minimizes the reduction in palatability by regulating the bulk density of the pet food granules to a specific range. Therefore although simultaneously achieving stable regulation of the mineral component and maintenance of preferred palatability is difficult when using a conventional configuration, both can be simultaneously enabled by the present configuration.

The bulk density of the pet food of the present disclosure is at least 38.5/100ml and no more than 50.0/100ml, and preferably at least 40.0/100ml and no more than 44.0/100ml. When the bulk density is limited to the specific range in this manner, stable regulation of the mineral components is enabled while minimizing the reduction in palatability. When the bulk density of the pet food is less than the above range, palatability deteriorates, and formation stability is insufficient, whereas when the bulk density of the pet food exceeds the above range, palatability suffers a large deterioration.

### Method of Measuring Bulk Density of Pet Food

A stainless steel cylindrical container having a capacity of 1L is used as a measuring container. The pet food granules are introduced by freely dropping until the measuring container is filled to overflowing. After filling with the pet food granules, excess pet food granules are carefully allowed to fall from the upper surface of the measuring container. The premeasured mass of the measuring container when empty is subtracted to give the mass (m₀) of the pet food in the measuring container. The bulk density (g/100ml) is given by m₀/10. The above measurement is repeated three times and the average value of the measurement values is taken as the bulk density of the pet food (g/100ml).

### Method of Manufacturing Pet Food

The pet food according to the present disclosure can be manufactured by a method described below that includes a swelling granulation step. Firstly, in the swelling granulation step, raw materials other than the palatability enhancing material that contains amino acids of those raw materials described above are mixed with a stirring apparatus, the mixed raw materials are passed through a preconditioner such as a DDC preconditioner, or the like, and then steam, water, oil and other additives as required are added to the mixed raw materials. Then, molding into a granular configuration is performed by pressing with an extruder (pressing extrusion granulation device) under heat and pressure, and cutting. The molded granules are dried in a drier and then the dried granules are refrigerated. After refrigeration, the palatability enhancing material is suitably coated by spraying or coating onto the granule surface.

In the swelling granulation step, when pressing under heat and pressure, a variation in the water vapor amount added to the DDC preconditioner or the extruder promotes or suppresses swelling without causing a change to the composition of the raw materials, and thereby enables a suitable increase or decrease to the bulk density and regulation of the bulk density of the pet food to a suitable value. In the above manner, the regulation of the bulk density to a suitable range enables an enhancement of the palatability of the pet food without any change to the composition of the raw materials of the pet food that uses a protein source material of plant origin as the principal protein source to enable the rigorous regulation of the content amount of the mineral component.

When there is no particular limitation in relation to the size or the shape of the pet food, one preferred example may have a diameter of 5 to 15 mm and a thickness of 2 to 5 mm.

Furthermore, the pet food of the present disclosure enables enhancement of palatability under circumstances in which rigorous regulation of the mineral components is required even in relation to a pet food other than a food for the purpose of preventing the occurrence of urinary calculi. Other types of pet food fall within the scope of the present invention when having the configuration of the present disclosure and enhancing palatability.

Furthermore, in addition to applications in relation to a cat, the pet food according to the present disclosure can be applied to a pet food for a dog to thereby enable enhancement of the palatability of a pet food for a dog. Such disclosure also fall within the scope of the present invention.

### Packaging for Pet Food (Bag)

The pet food according to the present disclosure is preferably provided to a consumer as a single packaged (bag) product by firstly packing small-capacity bags of 50 g to 500 g, and then packaging 3 to 10 of the small-capacity bags in a bag imparted with moisture proof properties. The fluctuation range of the mineral content amount in each of the small-capacity bags is no more than 1%, and in particular, the phosphorous content amount that exhibits a large effect on health maintenance of the lower urinary tract of cats of advanced age is rigorously regulated to a preferred range with a fluctuation range of no more than 2%.

The daily suitable consumption of pet food by a cat is 55 to 70 g/day for a small cat having a body weight of 3 to 4 kg, 70 to 95 g/day for a standard cat of medium size having a body weight of 4 to 6 kg, and 95 to 105 g/day for a large cat having a body weight of 6 to 7 kg. The small-capacity bags preferably contain an amount for one week in order to prevent oxygenation or addition of moisture that is not preferred for pet food.

The surface of the packaging (bag) preferably includes a statement of a concise indication in relation to satisfying both conditions of "high palatability" and "promoting and maintain health of the lower urinary tract of a cat" which is the characteristic effect of the present disclosure. Conventionally, the two effects required for a pet food for a cat of an advanced age have been opposing effects and difficulty has been encountered in the sufficient enablement of both effects. However, the unique formulation of the pet food according to the present disclosure realizes a high level of realizing the two effects. This feature for example is preferably included in the statement on the surface of the packaging using a clear and straightforward expression such as "for maintenance of health of the lower urinary tract" and "exceptional taste". In this manner, product discrimination can be created in relation to conventional products and a new demand can be created.

### EXAMPLES

Although the present invention will be described in detail with reference to the following examples, the present invention is not limited thereby.

### Manufacture of Pet Food

Materials other than the palatability enhancing material that are designated as raw materials indicated with the composition ratios in Table 1 are mixed with a stirring apparatus, steam and oil are added to the mixed raw materials by a DDC preconditioner, and then molding into a granular configuration is performed by pressing with an extruder (pressing extrusion granulation device) under heat and pressure, and cutting. The molded granules are dried in a drier and then the dried granules are refrigerated. Coating is performed by coating the palatability enhancing material onto the refrigerated granule surface. In the above processing steps, granular shaped products in which a diameter of one granule is 5 to 15 mm, and a thickness is 2 to 5 mm were respectively manufactured as granular pet food for the examples and the comparative examples. A digest as shown in Table 1 is a reconstituted protein substance that contains fish extract and meat extract.

Although the raw material composition is the same in Example 1 and Comparative Example 1, and in Comparative Example 2 and Comparative Example 3, the respective examples vary the steam amount in the DDC preconditioner and the extractor resulting in only a difference of the bulk density.

**[Table 1]**

| RAW MATERIAL COMPOSITION RATIO (MASS%) | | | Example 1 | | Comparative Example 1 | | Comparative Example 2 | | Comparative Example 3 | |
|---|---|---|---|---|---|---|---|---|---|---|
| PROTEIN SOURCE MATERIAL FROM PLANT ORIGIN | CORN GLUTEN MEAL | | 15.00 | | 15.00 | | 10.00 | | 10.00 | |
| PROTEIN SOURCE MATERIAL FROM ANIMAL ORIGIN | CHICKEN MEAL | | 0.00 | | 0.00 | | 7.50 | | 7.50 | |
| | PORK MEAT MEAL | | 0.00 | | 0.00 | | 3.50 | | 3.50 | |
| | WHITE FISH METAL | | 4.50 | | 4.50 | | | | | |
| | FISH MEAL | | 0.00 | | 0.00 | | 3.50 | | 3.50 | |
| | BEEF TALLOW CAKE | | 13.50 | | 13.50 | | 4.50 | | 4.50 | |
| | BEEF TALLOW PORK TALLOW | | 0.00 | | 0.00 | | 6.50 | | 6.50 | |
| | (TOTAL AMOUNT) | | | 18.00 | | 18.00 | | 25.50 | | 25.50 |
| PALATABILITY ENHANCING MATERIAL | | | 1.90 | | 1.90 | | 0.90 | | 0.90 | |
| CEREAL VARIETIES | | | 52.65 | | 52.65 | | 54.70 | | 54.70 | |
| BEEF TALLOW | | | 5.50 | | 5.50 | | 2.50 | | 2.50 | |
| FIBER SOURCE MATERIAL | | | 0.50 | | 0.50 | | 0.00 | | 0.00 | |
| INORGANIC COMPOUND | | | 3.55 | | 3.55 | | 1.05 | | 1.05 | |
| OTHER | | | 2.90 | | 2.90 | | 5.35 | | 5.35 | |
| MINERAL FLUCTUATION RANGE | | TOTAL MINERAL (CRUDE ASH) | 0.40 | | - | | 1.50 | | - | |
| | | PHOSPHOROUS | 0.18 | | - | | 0.29 | | - | |
| BULK DENSITY (g/100ml) | | | 43.0 | | 38.0 | | 38.0 | | 40.0 | |

The respective pet foods in the examples and the comparative examples exhibit the measurement results for bulk density as illustrated in Table 1 in accordance with the "Method of Measuring Bulk Density of Pet Food" as described above.

Furthermore, the fluctuation range of the mineral content amount of the product lots in relation to the respective pet foods described in detail hereafter (described in detail in Table 3) are added to Table 1.

The protein content amount measured by a Kjeldahl method for the respective pet foods in the examples and comparative examples resulted in 28.0 mass% for the example and comparative example 2, and 29.0 mass% for comparative example

### 1. Furthermore, the total mineral content amount of the example was 4.043 %.

### Evaluation of Stability of Mineral Content Amount

In the example and comparative example 2, conventional and known ICP emission spectrometry was used to measure the mineral (calcium and phosphorus) content amount of each of ten product lots for corn gluten meal and chicken meal used as a principal protein source material, and therefore evaluate and measure the fluctuation range of the content amount of each product lot. The results are shown in Table 2.

**[Table 2]**

| | PROTEIN SOURCE MATERIAL | MINERAL | MINIMUM VALUE (MASS%) | MAXIMUM VALUE (MASS%) | FLUCTUATION RANGE |
|---|---|---|---|---|---|
| Example | CORN GLUTEN MEAL | CALCIUM | 0.10 | 0.20 | 0.10 |
| | | PHOSPHOROUS | 0.25 | 0.50 | 0.25 |
| Comparative Example 2 | CHICKEN MEAL | CALCIUM | 2.03 | 7.69 | 5.66 |
| | | PHOSPHOROUS | 0.75 | 3.84 | 3.09 |

In the pet food in the example and comparative example 2, one lot is denoted as respectively 100 kg, and the mineral content amount for each lot for 10 lots of pet food (total mineral content amount and phosphorous content amount) was measured using a thermal ashing method, or the phosphorous content amount was measured using ICP emission spectrometry to thereby evaluate and measure the fluctuation range of the mineral content amount of each product lot. The results are shown in Table 3.

**[Table 3]**

| | MINERAL | MINIMUM VALUE (MASS%) | MAXIMUM VALUE (MASS%) | AVERAGE VALUE (MASS%) | FLUCTUATION RANGE |
|---|---|---|---|---|---|
| Example | TOTAL MINERAL (CRUDE ASH) | 4.90 | 5.30 | 5.20 | 0.40 |
| | PHOSPHOROUS | 0.62 | 0.80 | 0.71 | 0.18 |
| Comparative Example 2 | TOTAL MINERAL (CRUDE ASH) | 4.60 | 6.10 | 5.10 | 1.50 |
| | PHOSPHOROUS | 0.67 | 0.96 | 0.80 | 0.29 |

As illustrated in Table 1, Table 2 and Table 3, in the example, the fluctuation range of the mineral content amount is extremely small, and in contrast, in comparative example 2 that uses a protein source material of animal origin, the fluctuation range is extremely large. These measurement results show that the formulation in the example is preferred in order to limit the mineral content amount in pet food rigorously to a predetermined range, and the pet food in the example exhibits superior quality stability. In particular, it is shown that it is preferred as a pet food for a cat of advanced age of at least 6 years of age that requires suppression of the occurrence of urinary calculi by regulation of the mineral content.

### Palatability Measurement Test

The following method was used to perform a palatability measurement test in relation to the pet food in the examples and the comparative examples. The results are shown in Table 4.

Firstly, three sets of pet food were prepared, the sets being a first set of the example and comparative example 2, a second set of comparative example 1 and comparative example 2, and a third set of comparative example 2 and comparative example 3. In relation to each of the sets, testing was conducted for two days in order to monitor 20 cats of at least two years of age. On the first day, 70g was given at the same time to one cat for one from the left and the other from the right of the cat in the first set, and the amount eaten by the cat after one hour was measured. The consumed amount of pet food in the example and the consumed amount of pet food in comparative example 1 were calculated as a percentage in relation to the total weight of pet food consumed on the first day by one cat. The percentage obtained in relation to the 20 monitored cats was averaged as a result for the first day. On the second day, 70g was given at the same time to one cat for one from the right and the other from the left of the cat in the first set, and the amount eaten by the cat after one hour was measured. The consumed amount of pet food in the example and the consumed amount of pet food in comparative example 1 were calculated as a percentage in relation to the total weight of pet food consumed on the second day by one cat. The percentage obtained in relation to the 20 monitored cats was averaged as a result for the second day. Finally the average of the results for the first and the second day were calculated as a ratio of the consumed amount as a final result (palatability). The results show that the monitored cats indicated a preference and consumed in a correlation to a higher figure for the palatability. The pet food in the second set and the third set was evaluated in the same manner as the pet food in the first set.

**[Table 4]**

| | | | |
|---|---|---|---|
| PALATABILITY SCORE (CONTRAST) | FIRST SET | EXAMPLE:COMPARATIVE EXAMPLE 2 | 50:50 |
| | SECOND SET | COMPARATIVE EXAMPLE 1: COMPARATIVE EXAMPLE 2 | 45:55 |
| | THIRD SET | COMPARATIVE EXAMPLE 2: COMPARATIVE EXAMPLE 3 | 41:59 |

As described above, a pet food that uses a protein source material of plant origin (example, comparative example 1) exhibits superior product stability when compared with a pet food that uses a protein source material of animal origin (comparative example 2, comparative example 3). However, from the results for the second set, the palatability of a pet food that uses a protein source material of plant origin in substitution for a protein source material of animal origin is reduced when compared with a pet food (comparative example 2) that uses that uses a protein source material of animal origin of the same bulk density. However, the results for the first set indicate that a pet food that increases the bulk density of the pet food granules (example) exhibits sufficiently high palatability while using a protein source material of plant origin as a principal protein source.

## Claims

1. A granular pet food
having a bulk density of at least 38.5 g/100ml and no more than 50.0 g/100ml, and
a fluctuation range defined as the maximum to the minimum value of the total mineral content amount across 10 product lots being no more than 1.0%.

2. The pet food according to claim 1 wherein the fluctuation range of the phosphorous content amount for each product lot is no more than 0.2%.

3. The pet food according to claim 1 or 2 containing a protein source material of plant origin of at least 12 mass% and no more than 20 mass% in the pet food, and
a protein source material of animal origin of no more than 20 mass% in the pet food.

4. The pet food according to any one of claims 1 to 3 wherein the protein source material of plant origin is corn gluten.

5. The pet food according to any one of claims 1 to 4 wherein the corn gluten is contained in at least 12 mass% and no more than 20 mass% in the pet food.

6. A method of manufacturing a pet food of granular form,
comprising a swelling-granulation step of processing, into granular form while swelling, a pet food raw material containing: a protein material having at least 12 mass% content of plant derived protein source material, with a protein content of at least 40 mass% and no more than 80 mass%; and no more than 20 mass% content of animal derived protein source material with a protein content of at least 40 mass% and no more than 80 mass%,
wherein a swelling amount of the pet food raw material is regulated in the swelling-granulation step so that a bulk density of each grain of the pet food is at least 38.5 g/100 ml and no more than 50.0 g/100 ml.

7. The method of manufacturing a pet food according to claim 6 wherein the regulation of the swelling amount of the pet food raw material during the swelling granulation step is performed by regulation of a steam amount configured to fill an extruder and/or preconditioner.
